## Europäisches Patentamt

## European Patent Office

## Office européen des brevets

(11) Numéro de publication: **0 267 876**
**A2**

(12) **DEMANDE DE BREVET EUROPEEN**

(21) Numéro de dépôt: **87810644.2**

(22) Date de dépôt: **09.11.87**

(51) Int. Cl.⁴: **E 05 D 3/10**
**B 64 G 1/14**

(30) Priorité: **13.11.86 CH 4526/86**

(43) Date de publication de la demande:
**18.05.88 Bulletin 88/20**

(84) Etats contractants désignés:
**AT BE DE ES FR GB IT NL SE**

(71) Demandeur: **Ateliers de Constructions Mecaniques de Vevey S.A.**
**CH-1800 Vevey (CH)**

(72) Inventeur: **Baumgartner,Henri**
**19,chemin des Terrasses**
**CH-1095 Lutry (CH)**

(74) Mandataire: **Ardin, Pierre**
**PIERRE ARDIN & CIE 22, rue du Mont-Blanc**
**CH-1201 Genève (CH)**

(54) **Charnières de portes.**

(57) L'invention concerne une charnière de porte destinée préférentiellement aux véhicules astronautiques et plus particulièrement aux navettes spatiales. Cette charnière, d'un encombrement réduit, comprend un mécanisme simple composé de deux bielles, de trois articulations et de supports correspondants, l'ensemble étant disposé à l'intérieur de l'enceinte soit en un endroit protégé. Lors d'une manoeuvre d'ouverture de la porte celle-ci pivote autour d'un axe disposé à l'extérieur de la paroi de l'enceinte ce qui autorise de grands angles d'ouverture. L'installation comprend en outre des dispositifs de verrouillage sûrs empêchant l'ouverture de la porte et assurant en outre la transmission des efforts de la porte à l'enceinte, efforts qui existent lorsque sa pression intérieure est plus élevée que celle régnant à l'extérieur. Enfin, les charnières et les verrous peuvent être motorisés pour permettre la télécommande des manoeuvres d'ouverture et de fermeture de la porte.

FIG.1

EP 0 267 876 A2

**Description**

## CHARNIERES DE PORTES

La présente invention concerne une amélioration sensible apportée aux charnières de porte épaisse permettant de clôturer une enceinte dont les parois sont également épaisses. Certes, ce type de charnière est connu depuis longtemps. Mais celui objet de ce brevet est nouveau en ce sens que tous les éléments mécaniques de pivotement des charnières sont disposés dans le volume intérieur de l'enceinte et que, malgré cette disposition, la porte pivote autour d'un axe disposé à l'extérieur de l'enceinte.

De plus, en position fermée de la porte, un dispositif intervient et lie celle-ci à l'enceinte très rigidement de telle façon que les poussées importantes générées par la différence de pression existant entre les volumes intérieur et extérieur de l'enceinte soient transmises aussi directement que possible de la porte à la paroi de l'enceinte.

Enfin, l'encombrement des pièces constituant la charnière doit être aussi petit que possible afin d'éviter une réduction importante du volume utile de l'enceinte.

Une des utilisations préférentielles de ce type de charnière concerne l'industrie astronautique dont les satellites ou les navettes spatiales doivent, une fois placées sur leur orbite, ouvrir une porte pour déployer du matériel, lancer d'autres satellites à mettre sur une autre orbite terrestre, etc..

L'invention a pour objet une charnière du genre précité qui comprend un jeu de pièces constitué de deux éléments de fixation solidaires l'un de la paroi de l'enceinte, l'autre de la porte, de deux bielles articulées chacune par rapport à l'un des deux éléments de fixation par une liaison à axe pivotant, d'une troisième articulation à axe pivotant reliant les deux bielles l'une à l'autre, les trois axes de pivotement étant disposés selon les trois arêtes d'une pyramide triangulaire dont le sommet définit un point de pivotement de la porte.

L'invention concerne aussi une charnière de porte caractérisée en ce qu'elle comprend un verrou fixé à la paroi de l'enceinte et agissant sur un élément fixé à la porte pour la maintenir en position fermée.

Les dessins annexés représentent, schématiquement et à titre d'exemple, une forme d'exécution de l'objet de l'invention et des variantes, qui comprennent les pièces principales suivantes:

(1) porte
(2) paroi de l'enceinte
(3) élément de fixation solidaire de la paroi de l'enceinte
(4) élément de fixation solidaire de la porte
(5) bielle articulée par rapport à l'élément (3)
(6) bielle articulée par rapport à l'élément (4)
(7) articulation à axe pivotant de liaison de l'élément (3) à la bielle (5)
(8) articulation à axe pivotant de liaison de l'élément (4) à la bielle (6)
(9) articulation à axe pivotant de liaison des bielles (5 et 6)
(10) axe de pivotement de l'articulation (7)

(11) axe de pivotement de l'articulation (8)
(12) axe de pivotement de l'articulation (9)
(13) sommet de la pyramide triangulaire constituée par les trois axes de pivotement (10; 11; 12)
(14) jeu de pièces d'une charnière comprenant l'ensemble des pièces et des éléments portant les repères (3 à 13)
(15) axe de rotation de la porte (1)
(16) verrou
(17) axe de pivotement du verrou
(18) levier de manoeuvre de verrou
(19) axe de pivotement du levier (18)
(20) fixation de l'axe de pivotement (17) du verrou (16) à l'enceinte (2)
(21) biellette
(22) surface d'appui de l'élément de fixation (4) solidaire de la porte (1)
(23) surface d'appui du verrou
(24) sens de manoeuvre correspondant au dégagement du verrou
(25) sens de manoeuvre correspondant à l'engagement du verrou
(26) bossage support
(27) moteur avec roue dentée
(28) secteur de roue dentée monté sur l'axe (10)
(29) sens de rotation du moteur correspondant à une manoeuvre d'ouverture de la porte
(30) sens de rotation de l'axe (10) correspondant à une manoeuvre d'ouverture de la porte.

La figure 1 montre une disposition possible de la charnière selon l'invention, la porte étant entrouverte.

Les figures 2, 3 et 4 présentent une autre forme d'exécution de l'invention, le dessin des pièces étant différent afin de réduire au minimum l'encombrement des pièces de la charnière. Dans la figure 2, la porte est en position fermée, dans la 3 en position entrouverte et dans la 4 complètement ouverte.

Les figures 5 et 6 montrent le dispositif de verrouillage.

La figure 7 représente une charnière équipée d'un dispositif d'entraînement par moteur électrique et engrenages.

La figure 8 représente, à une échelle plus petite, deux charnières avec verrous et moteurs montées sur une enceinte et une porte.

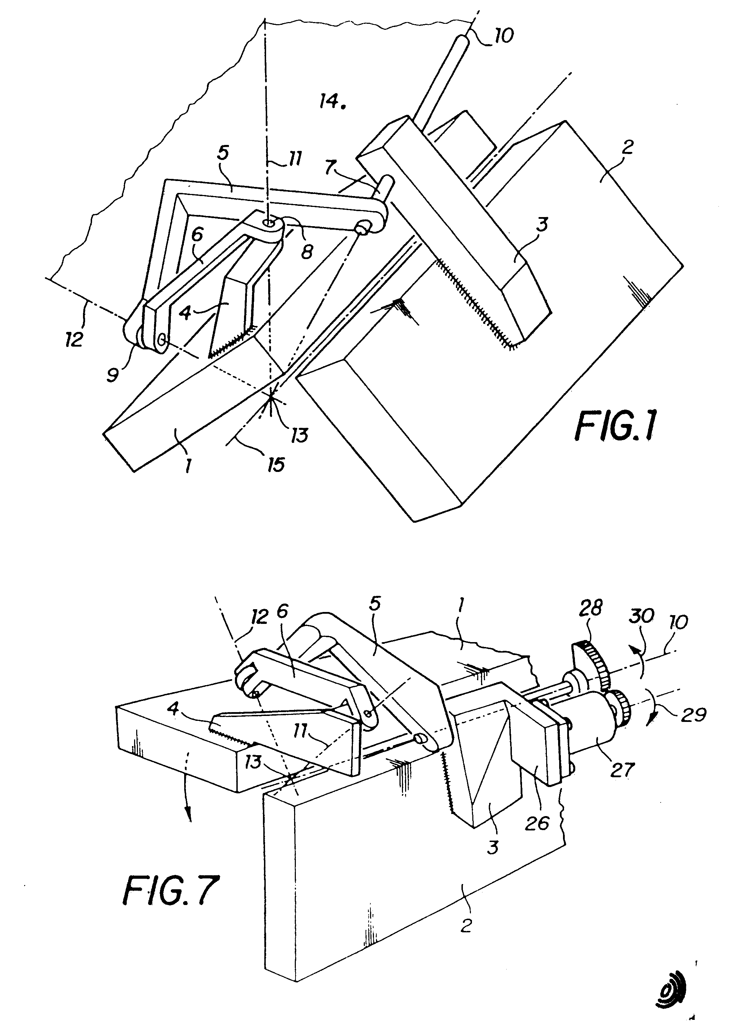

La forme des pièces représentées en perspective sur la figure 1, a été adoptée pour faciliter la compréhension du fonctionnement de la charnière. Pour l'exécution, les bielles et supports peuvent avoir des formes différentes, adaptées pour remplir leur fonction et ne nécessiter qu'un encombrement minimum.

Comme l'indique la liste des pièces, deux éléments de fixation (3 et 4) sont rendus solidaires de la paroi de l'enceinte (2) respectivement de la porte (1).

Cette liaison a été représentée sur la figure 1 par l'apport d'un cordon de soudure. Chacune de ces pièces de fixation porte un axe de pivotement (10) respectivement (11). A chacun de ces axes est fixée une bielle (5 et 6) qui sont articulées entre elles par une articulation (9) ayant un axe de pivotement (12). Les trois axes (10; 11; 12) concourent en un point. Ils sont placés dans des plans différents et constituent les arêtes d'une pyramide dont la section est triangulaire. Le sommet de cette pyramide est représenté en (13).

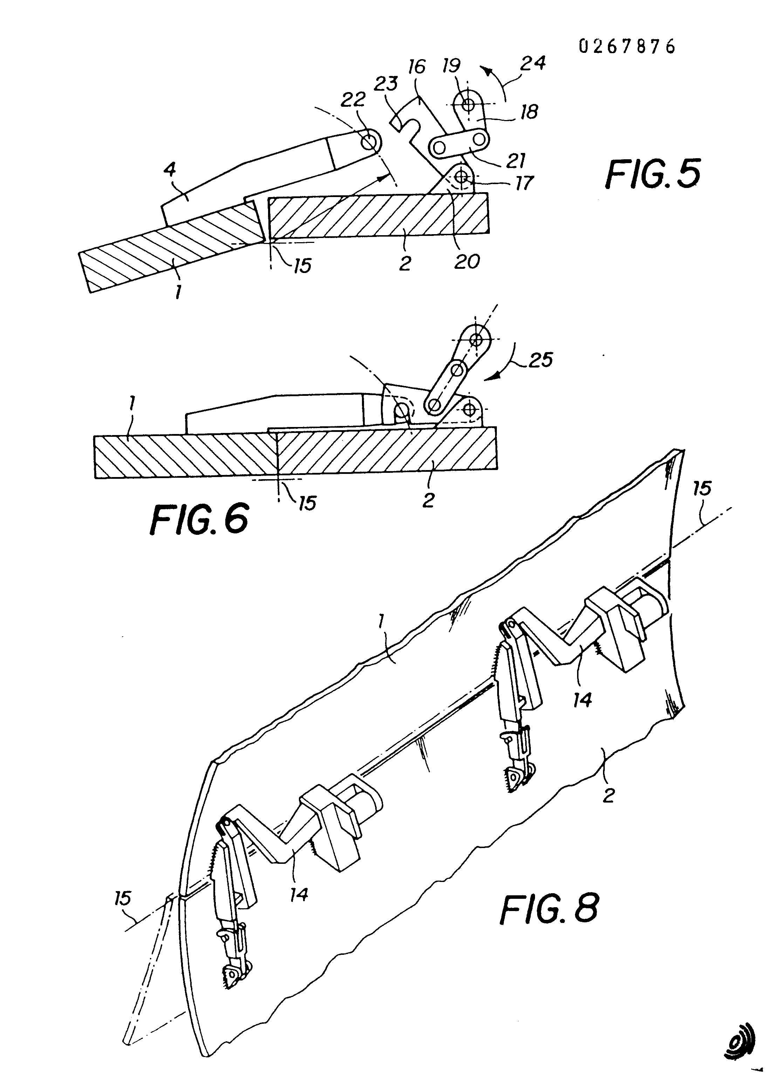

Si la porte n'était liée à l'enceinte que par l'intermédiaire d'une seule charnière, les mouvements relatifs seraient à l'image d'une liaison sphérique ou à rotule, la porte pivotant autour du point (13). En réalité, la liaison comprend au moins deux charnières comme l'indique la figure 8.

De ce fait, la porte et l'enceinte sont reliées par au moins deux points (13) correspondant chacun à une charnière (14). Les points (13) déterminent l'axe (15) qui constitue l'axe de rotation de la porte (1) par rapport a l'enceinte (2).

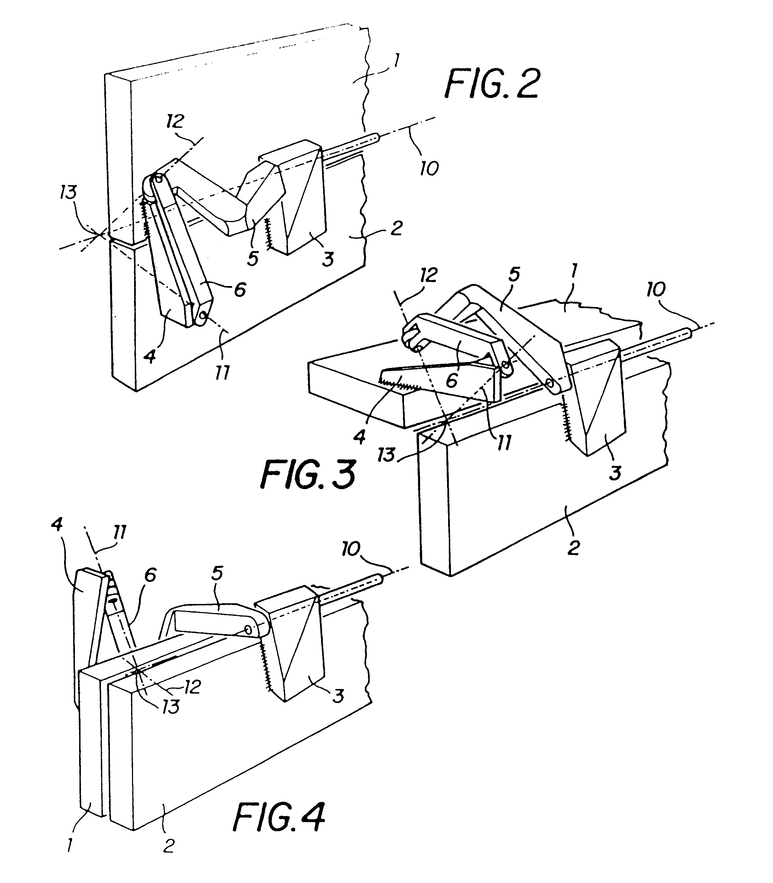

Les figures 2, 3 et 4 représentent, dans trois positions différentes, une seule et même charnière. La forme et la disposition des pièces ont été choisies pour permettre un angle d'ouverture maximum de la porte par rapport à l'enceinte et pour réduire l'encombrement du mécanisme surtout lorsque la porte est fermée. La fonctionnement reste semblable à celui de la charnière selon la figure 1.

Les figures 5 et 6 représentent une forme d'exécution possible d'un verrou. Pour ne pas compliquer inutilement le dessin, la charnière proprement dite n'a pas été représentée à l'exception de l'élément de fixation (4) solidaire de la paroi de la porte (1). Dans ce cas, cet élément se prolonge en direction de l'enceinte et porte un doigt constituant une surface d'appui (22). Un support (20) solidaire de l'enceinte (2) porte un axe de pivotement (17) du verrou (16) qui comprend une échancrure munie d'une surface d'appui (23). La manoeuvre du verrou a lieu par l'intermédiaire d'un mécanisme simple comprenant un levier (18) portant une biellette (21). Le levier (18) pivote autour d'un axe (19) et la biellette (21) est articulée par rapport au levier (18) ainsi qu'au verrou (16). Pour provoquer la manoeuvre de dégagement du verrou, il suffit, par l'intermédiaire d'un moteur non représenté au dessin, de faire pivoter l'axe (19) dans le sens de la flèche (24), soit le sens contraire des aiguilles de la montre, et inversément dans le sens de la flèche (25) pour son engagement.

Une fois la porte fermée, l'élément de fixation (4) solidaire de celle-ci est proche de la surface inférieure de la paroi de l'enceinte (2). Dans cette position il suffit de provoquer l'engagement du verrou par rotation pour l'axe (19) dans le sens de la flèche (25). La rotation entraîne l'engagement du verrou autour de l'axe, les surfaces (22 et 23) sont en contact l'une avec l'autre. Dans cette position du verrou (23), la porte (1) ne peut plus être ouverte.

Le verrou assure une seconde fonction. En effet, les surfaces (22 et 23) sont en contact l'une avec l'autre, une liaison continue de pièces est établie entre l'enceinte (2) et la porte (1), comme l'indique la figure 6. Cette liaison passe au travers du support (20) de l'axe (17) du verrou (16), des surfaces (23; 22) et de l'élément de fixation (4) solidaire de la porte (1). La disposition de ces pièces assure la transmission des efforts entre la porte et l'enceinte dûs à une différence de pression entre l'intérieur et l'extérieur de celle-ci. Dans ce cas, il est évident que l'installation doit comprendre autant de charnières avec dispositifs de verrouillage que nécessaire pour assurer la solidité de l'ensemble. Le nombre de verrous et de pièces de fixation (4) tels que représentés aux figures 5 et 6 peut être différent du nombre de charnières (14) proprement dites. Lorsque les pousées sont importantes, il peut être nécessaire de disposer d'un nombre plus grand de verrous que de charnières.

Il est évident que d'autres réalisations du verrou (23) peuvent assurer la même fonction. En effet, au lieu d'envisager un levier oscillant autour d'un axe, il aurait été possible de prévoir des pièces coulissantes l'une dans l'autre. La manoeuvre du verrou peut être provoquée de différentes manières en utilisant par exemple de l'énergie électrique provoquant le déplacement d'un élément magnétique, d'un moteur électrique, ou encore l'energie d'un fluide sous pression.

La figure 7 représente une charnière semblable à celle décrite précédemment mais dont l'axe (10) a été équipé d'un élément de motorisation. Dans le cas de cette figure, un élément de fixation (3) solidaire de l'enceinte a été muni d'un support supplémentaire (26) qui porte un moteur (27). L'axe de ce moteur comprend une roue dentée qui entraîne un secteur denté (28) monté sur l'axe de pivotement (10) de la charnière. Pour provoquer l'ouverture, respectivement la fermeture de la porte il suffit de faire tourner le moteur dans l'un respectivement l'autre sens des flèches (29 ou 30). L'installation peut comporter autant de moteurs qu'elle comprend de charnières.

**Revendications**

1. Charnière de porte de fermeture d'une enceinte, **caractérisée** en ce qu'elle comprend un jeu de pièces (14) constituè de deux éléments de fixation (3; 4) solidaires l'un de la paroi de l'enceinte (2) l'autre de la porte (1), de deux bielles (5; 6) articulées chacune par rapport à l'un des deux éléments de fixtion (3; 4) par une liaison (7; 8) à axe pivotant, d'une troisième articulation (9) à axe pivotant reliant les deux bielles (5; 6) l'une à l'autre, les trois axes (10; 11; 12) de pivotement étant disposés selon les trois arêtes d'une pyramide triangulaire dont le sommet (13) définit un point de pivotement de la porte.

2. Charnière selon revendication 1, **caractérisée** en ce qu'elle comprend au moins deux jeux de pièces, les sommets (13) des pyramides triangulaires de chaque jeu de pièce étant placé à l'extérieur de l'enceinte et alignés le long d'un segment de droite qui constitue l'axe (15) autour duquel la porte (1) pivote par rapport à l'enceinte (2) lors d'une manoeuvre d'ouverture, respectivement de fermeture.

3. Charnière selon revendication 2, **caractérisée** en ce qu'elle comprend un verrou (16) qui est fixé à la paroi de l'enceinte (2) et agit sur un élément de fixation (4) solidaire de la porte (1) pour le bloquer en position fermée.

4. Charnière selon revendication 3, **caractérisée** en ce que le verrou (16) et l'élément (4) solidaire de la porte (1) comprennent chacun au moins une surface d'appui (23; 22) qui sont en contact l'une avec l'autre lorsque la porte (1) est fermée et verrouillée, ces surfaces d'appui transmettant une poussée de la porte à l'enceinte lorsque la pression régnant à l'intérieur de celle-ci est supérieure à celle qui règne à l'extérieur.

5. Charnière selon revendication 2, **caractérisée** en ce qu'elle comprend un moteur (27) fixé à la paroi de l'enceinte (2), moteur dont le rotor entraîne en rotation l'extrémité d'une bielle (5) articulée par rapport à un élément de fixation (3) solidaire de l'enceinte (2) autour de son axe de pivotement (10) pour provoquer l'ouverture, respectivement la fermeture de la porte.

FIG.1

FIG.7

0267876

**FIG.2**

**FIG.3**

**FIG.4**

0267876

**FIG.5**

**FIG.6**

**FIG.8**